(19) Europäisches Patentamt
European Patent Office
Office européen des brevets

(11) Veröffentlichungsnummer: **0 058 819**
**B1**

(12) # EUROPÄISCHE PATENTSCHRIFT

(45) Veröffentlichungstag der Patentschrift: **04.09.85**

(51) Int. Cl.⁴: **H 02 G 3/04**

(21) Anmeldenummer: **82100249.0**

(22) Anmeldetag: **15.01.82**

(54) **Kombinierte Anschlusseinrichtung für verschiedenartige Ver- und Entsorgungssysteme.**

(30) Priorität: **20.02.81 DE 3106255**

(43) Veröffentlichungstag der Anmeldung: **01.09.82 Patentblatt 82/35**

(45) Bekanntmachung des Hinweises auf die Patenterteilung: **04.09.85 Patentblatt 85/36**

(84) Benannte Vertragsstaaten: **AT BE CH DE FR GB IT LI LU NL SE**

(56) Entgegenhaltungen:
**AU - B - 492 202**
**CH - A - 573 029**
**DE - A - 2 122 928**

**G-I-T. FACHZEITSCHRIFT FÜR DAS LABORATORIUM, Band 17, Nr. 12, November 1973, Seiten 1251-1253, Darmstadt, DE., W. SCHRAMM: "Energien von oben - Decken-Installationssysteme zur Energieversorgung von Arbeitsplätzen"**

(73) Patentinhaber: **Zumtobel GmbH & Co., Heurledweg 8, D-8990 Lindau (DE)**

(72) Erfinder: **Der Erfinder hat auf seine Nennung verzichtet**

(74) Vertreter: **Seids, Heinrich, Dipl.-Phys., Bierstadter Höhe 15 Postfach 5105, D-6200 Wiesbaden (DE)**

EP 0 058 819 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine kombinierte Anschlusseinrichtung für verschiedenartige Ver- und Entsorgungssysteme, vorzugsweise für Krankenhäuser, Laboratorien, Fertigungsstätten u.dgl., die in Art einer Säule an einem Bett, einem Arbeitstisch oder einem Fertigungsplatz, vorzugsweise dessen Eckbereich, anzuordnen ist, die erforderlichen Leitungen der in ihr vorgesehenen Ver- und Entsorgungssysteme in Vertikalführung in ihrem Inneren aufnimmt, und an mindestens einer ihrer Wandflächen mit den Leitungen der diversen Ver- und Entsorgungssysteme verbundene Anschlusseinrichtungen trägt, deren Anschlüsse in den jeweiligen Anforderungen entsprechend zusammengefassten Anschlussgruppen auf Anschlussträgern angebracht sind, die selbst wiederum Aussenwandteile der Säule bilden.

Es werden für Krankenhausbedarf, insbesondere Intensivpflege, kombinierte Anschlusseinrichtungen in Säulenform auf dem Markt angeboten, bei denen an der einen vertikalen Wandfläche Anschlusseinrichtungen für Gas- und Flüssigkeits-Versorgungssysteme und an einer oder mehreren vertikalen Säulenflächen elektrische Starkstrom- und Schwachstromanschlüsse vorgesehen sind. Ferner sind an einer oder zwei Seiten dieser Säule Nischen fest vorgesehen, um das eine oder andere Gerät, beispielsweise Monitor o.dgl., einzustellen. Diese bekannten säulenförmigen Anschlusseinrichtungen bieten grundsätzlich guten Zugang von allen Seiten her zu einem Krankenbett, jedoch haben sie den erheblichen Mangel, dass an den einen oder anderen Anschluss angesetzte Leitungen andere Anschlüsse an der vertikalen Säulenflächen überdecken. Deshalb können die Anschlüsse an den vertikalen Säulenflächen nur in grossen Abständen und somit nur in sehr begrenzter Anzahl vorgesehen werden. Auch können Geräte nur in sehr begrenzter Anzahl in den fest eingebauten Nischen der Säule aufgestellt werden. In der Praxis ist es deshalb notwendig, zusätzlich zu der Säule noch Stative zum Anhängen von Geräten u.dgl. zu benutzen, wodurch aber wiederum der durch die Säule zunächst ermöglichte allseitige Zugang zum Krankenbett weitgehend eingeschränkt oder sogar zunichte gemacht wird. Die gleichen Mängel weist auch eine säulenförmige, kombinierte Anschlusseinrichtung auf, wie sie aus AU-B-492 202 bekannt ist. Diese säulenförmige Anschlusseinrichtung hat nicht einmal Nischen, in denen Geräte aufgestellt werden könnten.

Aus G-I-T. Fachzeitschrift für das Laboratorium, Band 17, Nr. 12, November 1973, Seiten 1251 bis 1253, sind Energieversorgungseinheiten bekannt, die an der Decke aufzuhängen sind. Eine dieser Einheiten weist eine an der Decke anzubringende teleskopartige Trägersäule auf, an deren unteren Ende die kastenförmig ausgebildete eigentliche Anschlusseinheit angebracht ist. Diese Anschlusseinheit ist an ihrem unteren Umfangsrand von einer Trägerschiene umgeben. Neben dieser Anschlusseinheit ist eine Konsole zum Aufstellen eines Gerätes angebracht. Ferner ist oberhalb der eigentlichen Anschlusseinheit ein Satellitenträger schwenkbar an der Aufhängesäule gelagert. Die allein an der eigentlichen Anschlusseinheit angeordnete Trägerschiene hat jedoch zur Folge, dass die Anschlussleitungen von dort aufgehängten Geräten vor der die Anschlüsse tragenden Fläche der eigentlichen Anschlusseinrichtung vorbeihängen und dadurch den Zugang zu den übrigen Anschlüssen erschweren und jegliche Übersicht unmöglich machen, wenn mehrere Geräte an die Anschlusseinrichtung angeschlossen sind.

Aus CH-A-573 029 ist eine Anordnung für die Zuführung von Informationen und Energie in einem Gebäuderaum bekannt, bei der ein sich vertikal erstreckender, an mindestens einer der beiden horizontalen Raumbegrenzungsflächen befestigter, säulenartiger Zuführungskörper vorgesehen ist, an den die jeweils benötigten Geräte und Einrichtungen anzusetzen sind. Allerdings sind bei dieser Anordnung keinerlei Tragschienen vorgesehen, an denen Geräte aufgereiht angehängt werden könnten.

Andererseits sind beispielsweise aus DE-A-1 690 160, DE-A-2 122 928 und DE-A-2 309 935 kombinierte Anschlusseinrichtungen für verschiedene Versorgungssysteme zur Benutzung in Krankenhäusern und Laboratorien bekannt, bei denen ein die Leitungen und die Verzweigungs- und Anschlusseinrichtungen der verschiedenen Versorgungssysteme in seiner Längsrichtung aufnehmendes und im wesentlichen horizontal innerhalb des Raumes geführtes Kanalelement vorgesehen ist, das an der Aussenseite die jeweiligen Anschlüsse trägt. Wenn ein solches Kanalelement bzw. eine solche Anschlussschiene an einer Wand verlegt ist, bedeutet dies, dass Krankenbetten oder Arbeitstische zumindest mit einer Stirnseite an diese Wand gestellt werden müssen. Auch bei frei aufgehängter Anordnung im Raum nimmt eine solche horizontal geführte, schienenförmige Anschlusseinrichtung den Zugang zum Krankenbett, einem Arbeitstisch o.dgl. weg. Dieser Mangel lässt sich auch nicht dadurch beseitigen, dass man solche schienenförmigen Anschlusseinrichtungen relativ kurz ausbildet, beispielsweise in einer Länge, die der Breite eines Krankenbettes entspricht, und sie pendelartig von der Raumdecke herabhängend frei im Raum anordnet. Auch diese auf dem Markt angebotenen pendelartig aufgehängten Anschlusseinrichtungen mit verkürzter Anschlussschiene nehmen praktisch den Zugang zu einem Krankenbett oder Arbeitsplatz von einer Seite her weg, weil es im Hinblick auf die herzustellenden Anschlüsse und die Betätigung der Anschlusseinrichtung grundsätzlich nicht möglich ist, solche schienenförmigen, sich horizontal erstreckenden Anschlusseinrichtungen oberhalb Kopfhöhe anzuordnen. Dafür bieten allerdings diese bekannten, sich horizontal erstreckenden schienenförmigen Anschlusseinrichtungen sowohl in ihrer verkürzten, pendelartigen Form als auch in ihrer langen, sich über die gesamte Raumlänge erstreckenden Form gegenüber den bekannten säulenförmigen Anschlusseinrichtungen den Vorteil, dass bei horizontal erstreckter Schiene die verschiedenen Anschlüsse sehr viel mehr kompakt angeordnet werden können, insbesondere dann, wenn zusätzliche Geräteträgerschienen zugeordnet sind, wie dies beispielsweise aus DE-A-2 122 928 und DE-A-2 309 535 bekannt ist. Die Geräteträgerschiene hat aber bei diesen sich horizontal erstreckenden Anschlusseinrichtungen den Nachteil, dass eine oberhalb der schienenförmigen Anschlusseinrichtung angebrachte Geräteträgerschiene zur Folge hat, dass die Geräte vor der Anschlusseinrichtung hängen und die Anschlüsse verdecken, während bei unterhalb der sich horizontal erstreckenden Anschlusseinrichtung angebrachter Geräteträgerschiene entweder die eigentliche Anschlusseinrichtung unabgemessen hoch angebracht werden muss, um die Geräte in geeigneter Griffhöhe zu haben, oder die Geräte für das sichere Aufnehmen zu tief aufgehängt sind, wenn die Anschlusseinrichtung in für die Bedienung geeigneter Höhe angebracht sind.

Demgegenüber ist es Aufgabe der Erfindung, eine säulenförmige kombinierte Anschlusseinrichtung der eingangs beschriebenen Art dahingehend wesentlich zu verbessern, dass sie ohne Verminderung der Zugangsmöglichkeit zu einem Krankenbett oder Arbeitsplatz wesentlich erhöhte Möglichkeiten zum Anbringen und Anschliessen von Geräten und die Möglichkeit wesentlich kompakterer Anordnung der Anschlüsse und damit die Möglichkeit wesentlicher Erhöhung der Anzahl von Anschlüssen bietet, wobei die Übersichtlichkeit für das Anschliessen von Geräten und dergleichen und die Arbeitssicherheit noch weithin verbessert werden sollen.

Diese Aufgabe wird dadurch gelöst, dass

- die Säule in ihrem inneren Aufbau ein aus Profilschienen gebildetes, vertikale Aufnahmekanäle für Ver- und Entsorgungsleitungen einschliessendes, stabiles Säulengerüst aufweist,
- an die Aussenseite dieses Säulengerüstes weitere vertikale Aufnahmekanäle für Ver- und Entsorgungsleitungen bildende Profilschienen angesetzt sind und
- die die Aufnahmekanäle abdeckenden Aussenflächen der Säule durch an den Profilschienen angebrachte Deckplatten und Anschlussträger gebildet sind, wobei
- an dem durch Profilschienen gebildeten Säulengerüst mindestens eine sich ringförmig in einer im wesentlichen horizontalen Ebene um die Säule herum mit Abstand von deren Aussenflächen erstreckende Geräteträgerschiene und an mindestens einer Seite der Säule mindestens eine seitlich vorstehende Konsole angebracht sind,
- die Konsole an mindestens einem Seitenrand eine mit diesem parallel verlaufende und bezüglich der Konsolen-Tragfläche vorgesetzte Geräteträgerschiene trägt und
- die Anbringungshöhe der Konsole und der ringförmigen Geräteträgerschiene wählbar oder verstellbar ist.

Durch die Erfindung wird eine wesentlich verbesserte säulenförmige kombinierte Anschlusseinrichtung geschaffen, bei der eine grosse Vielzahl und Vielfalt von Anschlüssen vorgesehen sein kann. Die Säule weist ein aus sich im wesentlichen vertikal erstreckenden Profilschienen gebildetes Säulengerüst auf, in welchem vertikale Aufnahmekanäle für Ver- und Entsorgungsleitungen gebildet sind, wobei dieses Säulengerüst an seiner Aussenseite noch weitere Profilschienen trägt, um noch zusätzliche, weiter aussen liegende Aufnahmekanäle für Ver- und Entsorgungsleitungen zu bilden. Die im Inneren des eigentlichen Säulengerüstes gebildeten Aufnahmekanäle sind auf diese Weise besonders gut gekapselt und abgedeckt, während die weiter aussen liegenden, also durch die äusseren Profilschienen gebildeten Aufnahmekanäle in direkter Nachbarschaft zu den eigentlichen Anschlusselementen liegen. Die durch die verschiedenen Profilschienen gebildeten Aufnahmekanäle sind in ihre offenen Seiten durch die Aussenfläche der Säule bildende Deckplatten und Anschlussträger abgedeckt.

Es ist zwar aus AU-B-492 202 bekannt, einen länglichen Terminal-Kasten aus in den Eckbereichen des Kastenprofils angebrachten Profilschienen zu bilden, die auf den Kastenflächen mit Anschlussträgern oder sonstigen Platten überdeckt sind. Da diese vertikalen Profilschienen nur über die die Seitenflächen des Terminal-Kastens abdeckenden Platten verbunden sind, fehlt dem ganzen Kasten die erforderliche Stabilität und vor allem allseitige Nutzbarkeit.

Es ist aus CH-A-573 029 bekannt, eine mit Anschlüssen versehene Säule aus einer Profilschiene oder mehreren zusammengesetzten Profilschienen zu bilden. Hierdurch wird aber der Säulenquerschnitt nur relativ klein, wenn man nicht übermässiges Säulengewicht in Kauf nehmen will.

Durch die Bildung eines inneren Säulengerüstes und daran angesetzten, zusätzliche Aufnahmekanäle bildenden Profilschienen und das Umbauen dieses Gebildes mit Anschlussträgern und Deckplatten lässt sich ein stabiler Säulenaufbau mit für die gewünschte Zwecke geeigneter Grösse des Säulenquerschnittes mit relativ geringem Eigengewicht der Säule erstellen. Die Konsolen erhalten durch ihre Anbringung am inneren Säulengerüst so hohe Stabilität, dass sie ohne weiteres geeignet sind, die für jeden Fall erforderlichen Geräte und Einrichtungen an der Trägerschiene der Konsole aufhängen zu können. Gleiches gilt auch für die am inneren Säulengerüst befestigten ringförmigen Geräteträgerschienen. Die Anbringungshöhe sowohl der Konsolen als auch der ringförmigen Geräteträgerschienen kann auf diese Weise wählbar oder verstellbar sein.

Die an der Säule und an der Konsole vorgesehenen Geräteträgerschienen bieten in Verbindung mit der gruppenweisen Anordnung der Anschlüsse die Möglichkeit, erforderliche Geräte, wie Tropfflaschen, Gaswaschflaschen, Insufflationsgeräte, Narkosegas-Absaugeinrichtungen, Dränageeinrichtungen u.dgl. übersichtlich an der Säule bzw. deren Konsole aufzuhängen und übersichtlich an den jeweiligen Anschluss anzuschliessen. Durch die Verschiedenartigkeit der beiden Trägerschienen ist es möglich, eine übersichtliche Trennung zwischen Geräten und Einrichtungen für Versorgung und Geräten und Einrichtungen zur Entsorgung zu treffen. Beispielsweise können die an die Versorgungsleitungen angeschlossenen Geräte und Einrichtungen an der Trägerschiene an einer Konsole aufgehängt werden. Hierbei bietet sich der besondere Vorteil, dass die Anschlussleitungen von der Anschlusseinrichtung zu dem jeweiligen Gerät bereits auf kurze Länge seitlich aus dem Bereich der Anschlussträger herausgeführt ist und keine nennenswerten Teile der Anschlussträger abdecken. Vor allem bietet sich mit der dadurch ermöglichten übersichtlichen Aufhängungs- und Anbringungsweise der zusätzlichen Geräte auch eine optimale Leitungsführung von dem jeweiligen zusätzlichen Gerät zu dem Patienten oder zum eigentlichen Arbeitsplatz. Es lässt sich dadurch jegliche nennenswerte Behinderung der gewünschten allseitigen Zugangsmöglichkeit zum Patienten oder zum Arbeitsplatz ausschliessen. Dies gilt auch für grössere Geräte, wie Monitoren, Beatmungsgeräte u.dgl., die mittels einer oder mehrerer Konsolen in optimaler Stellung angeordnet werden können, ohne die Stabilität der säulenförmigen Anschlusseinrichtung in Frage zu stellen.

Die Anschlussträger und die Konsolen können auf allen Aussenflächen der Säule verteilt angeordnet sein. Bevorzugt wird man jedoch die Säule im wesentlichen nur an einer Seite oder zwei gegenüberliegenden Seiten mit Anschlussträgern versehen, und die im wesentlichen von Anschlussträgern freien Seiten mit einer oder mehreren Konsolen besetzen oder zum Anbringen von mindestens einer Konsole ausbilden. Auf diese Weise können die für das Anbringen der Konsolen vorgesehenen Seiten der Säule mit entsprechend stabilen Konstruktionsteilen aufgebaut werden, während die mit Anschlussträgern besetzten Seiten der Säule zu der geeigneten Führung von Kabel und Leitungen und den erforderlichen Hohlräumen für die Anschlusselemente ausgebildet werden können.

Die Konsolen können den verschiedensten Anwendungsfällen angepasst sein. So kann beispielsweise mindestens eine solche Konsole vorgesehen sein, die um eine horizontale Achse, vorzugsweise ihre Mittelachse, kipp-einstellbar an der Säule angebracht ist. Die Konsole kann im Rahmen der Erfindung neben oder anstatt ihrer eigentlichen Bestimmung als Stellfläche für Geräte auch für verschiedenste andere Zwecke nutzbar sein. Hierzu kann die Konsole beispielsweise mit mindestens einseitig ausziehbarer, zusätzlicher Stellplatte versehen sein. Die Konsole kann auch mit mindestens einem Schubfach versehen sein. Man kann auch eine oder mehrere Konsolen vorsehen, die mit mindestens einem eingebauten Anschlussträger ausgestattet sind.

Als vorteilhafte Weiterbildung der Erfindung kann die Säule zumindest begrenzt um ihre vertikale Achse drehbar sein. Es ist auch möglich, dass die Säule mindestens zwei vertikal übereinander angeordnete Säulenabschnitte aufweist und mindestens einer dieser Säulenabschnitte um die vertikale Säulenachse drehbar ist. Mit Hilfe dieser Drehbarkeit der gesamten Säule oder mindestens eines Säulenabschnittes lässt sich eine optimale Ausrichtung der Säule gegenüber dem jeweiligen Bett oder dem jeweiligen Arbeitsplatz vornehmen.

Die Säule kann in verschiedener Weise ausgebildet sein. Beispielsweise kann sich die Säule vom Fussboden bis zur Decke über die gesamte Raumhöhe erstrecken. Diese Ausführung wird sich für alle diejenigen Anwendungsfälle empfehlen, bei welchen die Säule mit einer sehr grossen Anzahl von Anschlüssen zu besetzen ist und bzw. oder die Säule eine grosse Anzahl von Geräten, insbesondere auf Konsolen aufzustellenden Geräten, tragen soll. Für solche Anwendungszwekke bietet die sich vom Fussboden bis zur Decke über die gesamte Raumhöhe erstreckende Säule besondere Stabilität.

In einer anderen vorteilhaften Ausführungsform erstreckt sich die Säule vom Fussboden aus auf einen Teil der Raumhöhe nach oben und ist am oberen Ende mit einer Deckwand verschlossen. Diese Ausführungsform eignet sich insbesondere für solche Anwendungsfälle, in denen die zur Säule führenden Installationsleitungen des Gebäudes bzw. Raumes im Fussboden verlegt sind.

Besonders vorteilhaft für die Praxis wird jedoch eine Ausführungsform der Erfindung sein, bei der sich die Säule als Hängesäule von der Raumdekke über einen Teil der Raumhöhe nach unten erstreckt und an der Unterseite mit einer Säulen-Bodenwand verschlossen ist. Einerseits ist eine solche Ausführungsform der Säule der gängigen Führung der Installationsleitungen in einen Dekkenzwischenraum angepasst und andererseits auch die für das Reinigen des Raumes günstige Bodenfreiheit der Säule gewährleistet.

Für spezielle Anforderungen kann die Säule auch begrenzt seitlich verschiebbar angebracht sein.

Für besondere Anwendungsfälle kann eine Ausführungsform der Erfindung vorgesehen sein, bei der die Säule als fahrbare Einheit auf einem Wagen angebracht ist. Diese Ausführungsform der Erfindung eignet sich insbesondere dann, wenn die Säule an Stellen eingesetzt werden soll, wo nicht die für den Anschluss der Säule erforderlichen Installationsvoraussetzungen gegeben sind. Ausserdem eignet sich diese Ausführungsform der Erfindung insbesondere auch für solche Anwendungsfälle, bei denen die Säule mit den in ihr enthaltenen Anschlussmöglichkeiten nur mehr oder weniger kurzzeitig eingesetzt werden soll. Bei Krankenhaus- und Lazarettausstattung kommen beispielsweise solche fahrbaren Säulen-Einheiten beispielsweise als Notfall-Einheiten in Betracht, beispielsweise bei kurzfristig einzuleitenden Behandlungsgängen wie Emboliebehandlung, Infarktbehandlung u.dgl., die ohne Transport des Patienten am Krankenbett selbst durchzuführen sind. Bei dieser fahrbaren Einheit kann der Wagen Behälter als Reservoire und Aufnahmetanks für die in der Säule vorgesehenen Gas- und Flüssigkeits-Ver- und Entsorgungssysteme enthalten zum Anschluss der in der Säule vorgesehenen elektrischen Systeme für Energieversorgung, Nachrichtenübermittlung und Überwachung kann man den Wagen mit entsprechenden Anschlüssen versehen, um von dort über Kabelverbindung den Anschluss zu den entsprechenden Zentralen elektrischen Systemen herzustellen. Für solche Fälle, wo auch die Installationsvoraussetzungen für solchen Anschluss fehlen, kann der Wagen mit Stromerzeugungsaggregaten für die in der Säule vorgesehenen elektrischen Energieversorgungssysteme ausgestattet sein. Man kann sogar in solchen Fällen auch den Wagen mit Geräten zur drahtlosen Signalübermittlung für in der Säule enthaltene Systeme für Nachrichtenübermittlung und Überwachung ausstatten, beispielsweise mit Ultraschall-Übermittlungsgeräten.

Ausführungsbeispiele der Erfindung werden im folgenden anhand der Zeichnung näher erläutert.

Es zeigen:

Fig. 1 eine Draufsichtskizze zum Vergleich der Anschlussweise eines Krankenbettes an einer horizontal erstreckte schienenförmige Anschlusseinrichtung zum Anschluss des Krankenbettes an eine säulenförmige Anschlusseinrichtung;

Fig. 2 eine erfindungsgemässe säulenförmige Anschlussvorrichtung, die sich vom Raumboden bis zur Raumdecke erstreckt und mit zwei seitlichen Konsolen ausgestattet ist;

Fig. 3 die säulenförmige Anschlussvorrichtung gemäss Fig. 2 in Seitenansicht;

Fig. 4 den unteren Abschnitt einer säulenförmigen Anschlusseinrichtung entsprechend Fig. 1 und 2, jedoch ausgerüstet mit vier seitlichen Konsolen;

Fig. 5 eine erfindungsgemässe Anschlusseinrichtung mit sich vom Raumboden bis in einen Teil der Raumhöhe nach oben erstreckenden Säule und zwei seitlich angebrachten Konsolen in Vorderansicht;

Fig. 6 eine an der Raumdecke angebrachte und sich auf einen Teil des Raumes nach unten erstreckende erfindungsgemässe säulenförmige Anschlusseinrichtung mit zwei seitlich angebrachten Konsolen in Vorderansicht;

Fig. 7 einen Schnitt nach der Linie 7–7 der Fig. 6 mit Draufsicht auf die Konsolen;

Fig. 8 den Bereich 8 der Fig. 7 in vergrösserter Darstellung;

Fig. 9 einen Schnitt nach der Linie 9–9 der Fig. 6 in vergrösserter Darstellung;

Fig. 10 einen Schnitt nach der Linie 10–10 der Fig. 7 in vergrösserter Darstellung;

Fig. 11 den Bereich 11 der Fig. 6 vergrössert im Schnitt;

Fig. 12 den Bereich 12 der Fig. 6 vergrössert im Schnitt;

Fig. 13 eine Anschlusseinrichtung ähnlich derjenigen der Fig. 6 mit zwei Normalkonsolen und einer Spezialkonsole für Narkosegerät;

Fig. 14 eine fahrbare Säuleneinrichtung in Seitenansicht; und

Fig. 15 die fahrbare Einheit gemäss Fig. 14 in Vorderansicht.

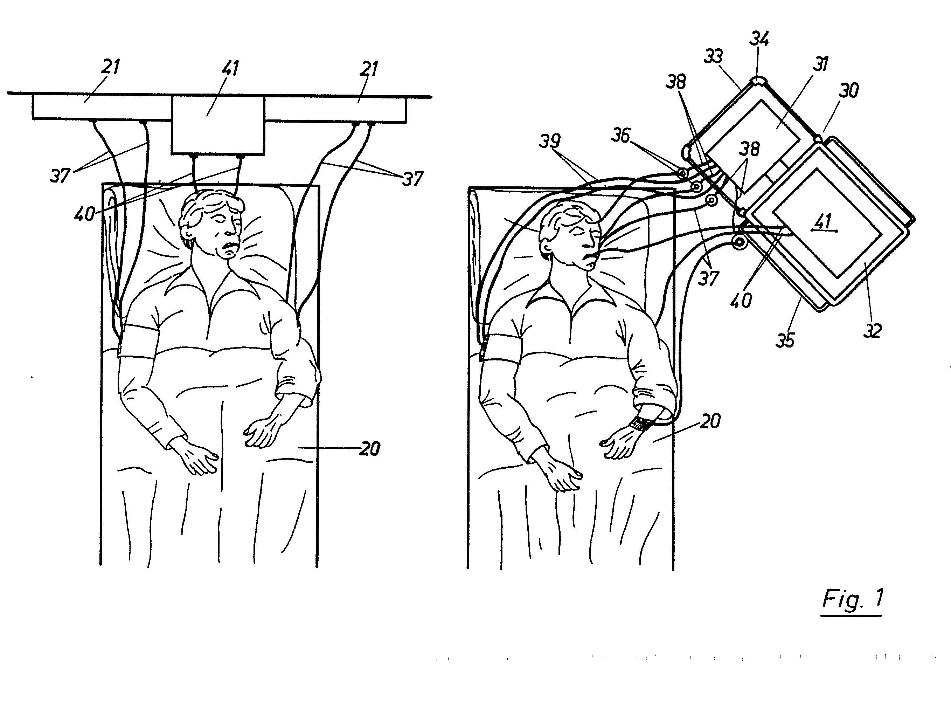

Die dargestellten Beispiele zeigen die Anwendung der kombinierten Anschlusseinrichtung im Krankenpflegebereich. Dabei zeigt Fig. 1 eine bekannte kombinierte Anschlusseinrichtung mit einer sich entlang der Kopfseite des Krankenbettes 20 horizontal erstreckenden Anschlussschiene 21 im Vergleich mit der erfindungsgemässen säulenförmigen Anschlusseinrichtung 30 mit Säule 31 und seitlich angebauter Konsole 32, wobei die Säule 31 an einem Kopf nahen Eckbereich des Krankenbettes 20 angeordnet ist. Die Säule 31 hat rechteckigen Querschnitt und ist mit einer ringförmigen Geräteträgerschiene 33 umgeben, die an ihren Eckbereich nachgiebige Puffer 34 trägt. Ebenso trägt die Konsole 32 entlang ihrer Vorderkante und ihrer rückwärtigen Kante je eine Geräteträgerschiene 35, die von der eigentlichen Konsolenfläche von der Kante her abgesetzt ist.

An den Geräteträgerschienen 33 und 35 sind die für die Behandlung des Patienten erforderlichen Geräte 36 aufgehängt. Von diesen Geräten 36 führen Leitungen 37 über den Eckbereich des Bettes zum Patienten und Leitungen 38 zu den an der Säule 31 angebrachten Anschlüssen. Ferner sind Leitungen 39 direkt von Anschlüssen an der Säule 31 zum Patienten geführt sowie Leitungen 40 von einem auf die Konsole 32 gestellten Monitor oder sonstigen Gerät 41 zum Patienten. Alle diese Leitungen verlaufen über den Eckbereich des Krankenbettes 20 und behindern nicht nennenswert den allseitigen Zugang zum Patienten. Dagegen verlaufen bei der herkömmlichen, sich horizontal erstreckenden Anschlussschiene 21 und bei einem darüber aufgestellten Gerät, beispielsweise Monitor 41, die Leitungen 37 und 40 über die Stirnseite und die beiden kopfnahen Eckbereiche des Krankenbettes 20. Der Kopfbereich des Patienten ist daher nur schwer zugänglich und überhaupt nicht zugänglich von der Kopfseite des Krankenbettes 20 her. Auch das Gerät bzw. der Monitor 41 ist so gut wie unzugänglich.

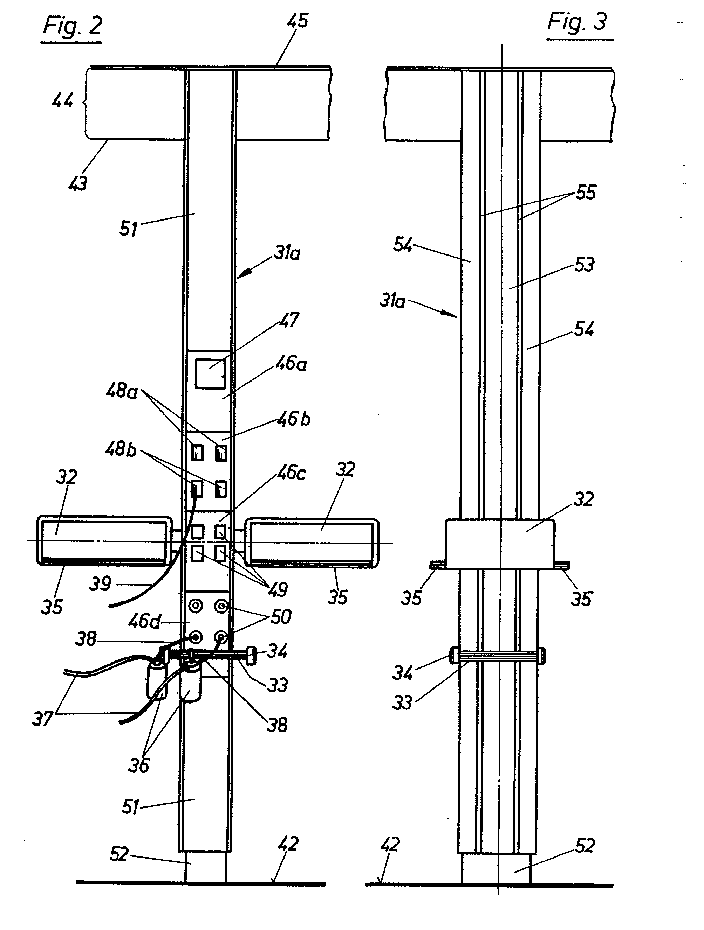

Fig. 2 zeigt eine Ausführung, bei der sich die Säule 31a vom Fussboden 42 bis zur Raumdecke 43 und durch diese hindurch und durch den Zwischendeckenbereich 44 bis an die Geschossdekke 45 erstreckt. Im unteren Teil trägt die Säule 31a eine sich ringsum erstreckende ringförmige Geräteschiene 33 mit Eckpuffern 34 zum Anhängen von Geräten 36 wie Gaswaschflaschen u.dgl. Im Beispiel der Fig. 2 und 3 sind zwei seitlich an der Säule 31a angebrachte Konsolen 32 vorgesehen, die wie im Beispiel der Fig. 1 ebenfalls entlang ihrer vorderen Unterkante und ihrer hinteren Unterkante je eine Geräteträgerschiene 35 tragen. Die in Fig. 2 ersichtliche Vorderfläche der Säule 31a ist in demjenigen Bereich der vom Pflegepersonal gut erreicht werden kann, mit Anschlussträger 46a, 46b, 46c und 46d besetzt. Jeder dieser Anschlussträger enthält eine Gruppe von Anschlüssen. So hat der Anschlussträger 46a einen Gas-Absauganschluss 47. Der Anschlussträger 46b weist in diesem Beispiel 4 Schwachstromanschlüsse 48a und 48b beispielsweise für Nachrichtenübermittlung und Überwachungsleitungen auf. Der Anschlussträger 46c weist in dem dargestellten Beispiel eine Gruppe von vier Starkstromsteckdosen 49 auf, während im Anschlussträger 46d vier Gassteckdosen 50 angebracht sind. Unterhalb und oberhalb des mit den Anschlussträgern 46a, 46b, 46c und 46d besetzten Bereiches ist die Vorderseite der Säule 31a mit geschlossenen Wandplatten 51 verkleidet. Am unteren Ende der Säule 31a ist ein Sockel 52 vorgesehen, der die zum Abtragen des Gewichtes der Säule 31a, der angebrachten Konsole 32 und der angehängten und aufgestellten Geräte erforderlichen Trageinrichtungen enthält. Wie Fig. 3 zeigt, sind die Seitenflächen der Säule 31a im mittleren Bereich durch Wandplatten 53 verkleidet, während in den Aussenbereichen die Seitenflächen von Kanälen bildenden Profilschienen 54 freiliegen. Dazwischen sind Füll- und Trägerprofile 55 angeordnet. Für die verschiebbare Anordnung der Konsolen 32 und Geräteträgerschienen 33 können die Wandplatten 53 in mehr oder weniger kurzen Abschnitten vorgesehen sein. Wenn der mit Anschlussträgern besetzte Bereich an der Vorderseite der Säule (Fig. 2) nicht ausreicht, können auch an der Rückseite der Säule Anschlussträger gewünschter Ausbildung und Anordnung angebracht sein, während die beiden Seitenflächen der Säule 31a frei von Anschlüssen gehalten sind.

Man könnte sich jedoch auch eine Ausführung solcher Art vorstellen, bei denen die Anschlussträger 46a, 46b, 46c, 46d und die Konsolen auf allen Aussenflächen der Säule verteilt angeordnet sind. Die Anbringung der Geräteträgerschiene 33 ist im dargestellten Beispiel derart, dass diese ringförmige Geräteträgerschiene sich rings um den Umfang der Säule 31a erstreckt, so dass Geräte 36 um den gesamten Umfang der Säule 31a herum aufgehängt werden können. Zur sicheren, geordneten Anbringungsweise der Geräte 36 ist die ringförmige Geräteträgerschiene 33 im wesentlichen in einer horizontalen Ebene angeordnet.

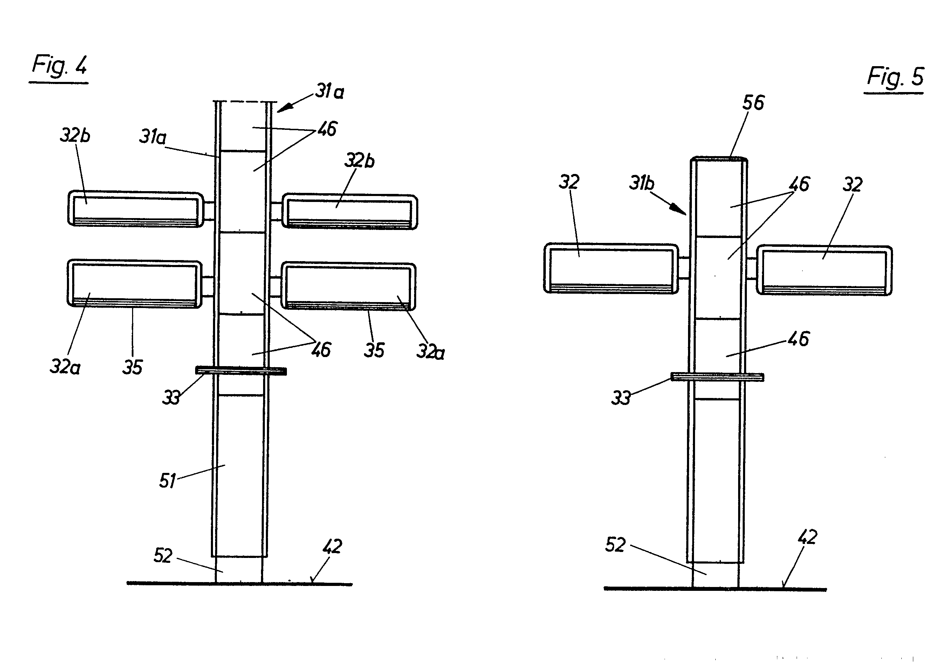

Fig. 4 zeigt eine gegenüber Fig. 2 und 3 insofern abgewandelte Ausführungsform als dort zu jeder Seite der Säule 31a zwei Konsolen 32a und 32b in einem Abstand übereinander angebracht sind, wobei die Konsolen 32a wie die Konsolen 32 der Fig. 2 und 3 mit Geräteträgerschienen 35 ausgestattet sind, während die Konsolen 32b keine Geräteträgerschiene aufweisen. Ferner sind in Fig. 4 die Anschlussträger 46 nicht unterschiedlich dargestellt, um zu zeigen, dass die Geräteträger 46 als Module den jeweiligen Anforderungen entsprechend angesetzt werden können.

Im Beispiel der Fig. 5 ist eine Säule 31b vorgesehen, die sich vom Fussboden 42 nur auf einen Teil der Raumhöhe nach oben erstreckt. Diese Säule 31b ist am oberen Ende mit einer Deckwand 56 verschlossen. Im übrigen sind der Aufbau der Säule 31b, ihre Ausstattung mit Anschlussträgern 46, die Anbringung der ringförmigen Geräteträgerschiene 33 und der Konsolen 32 gleich wie in den Beispielen der Fig. 2 bis 4.

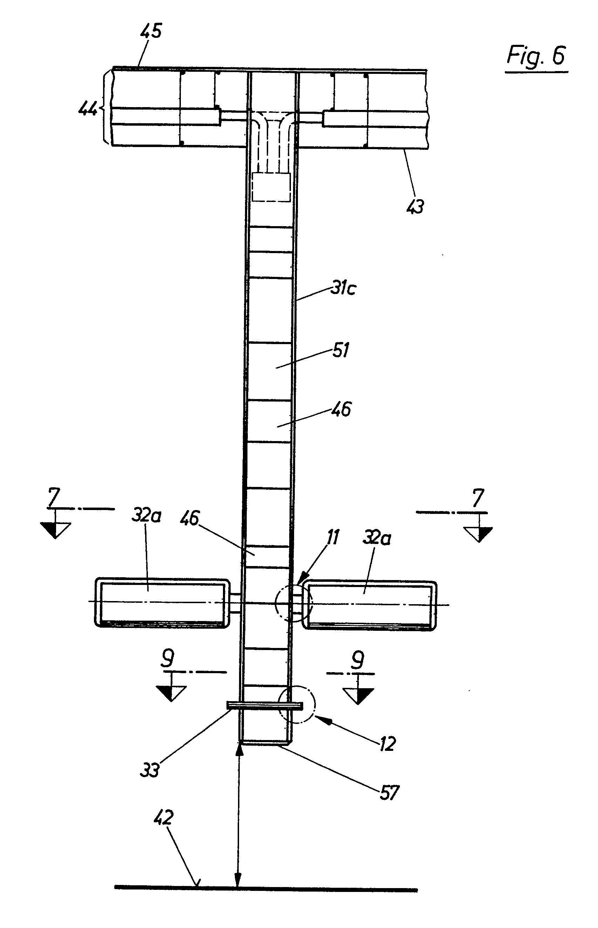

Fig. 6 zeigt die bevorzugte Ausführungsform der Erfindung, und zwar eine Säule 31c, die an der Geschossdecke 45 aufgehängt ist und sich von dort durch den Zwischendeckenraum 44 und die Zwischendecke 43 auf eine gewünschte Höhe als Hängesäule in den Raum nach unten erstreckt. Die Säule 31c ist wiederum an ihrer Vorderseite und ggf. auch an ihrer Rückseite mit modulartigen Anschlussträgern 46 besetzt und oberhalb der Reichweite für das Bedienungspersonal mit Platten 51 verkleidet. Die Seitenwände der Säule 31c sind in gleicher Weise ausgebildet wie die in Fig. 3 gezeigten Seitenwände der Säule 31a. Am unteren Ende ist die Säule 31c mit einer Bodenplatte 57 verschlossen. Die Einführung der diversen Leitungen von der Rauminstallation erfolgt am oberen Ende der Säule 31c im Zwischendeckenraum 44.

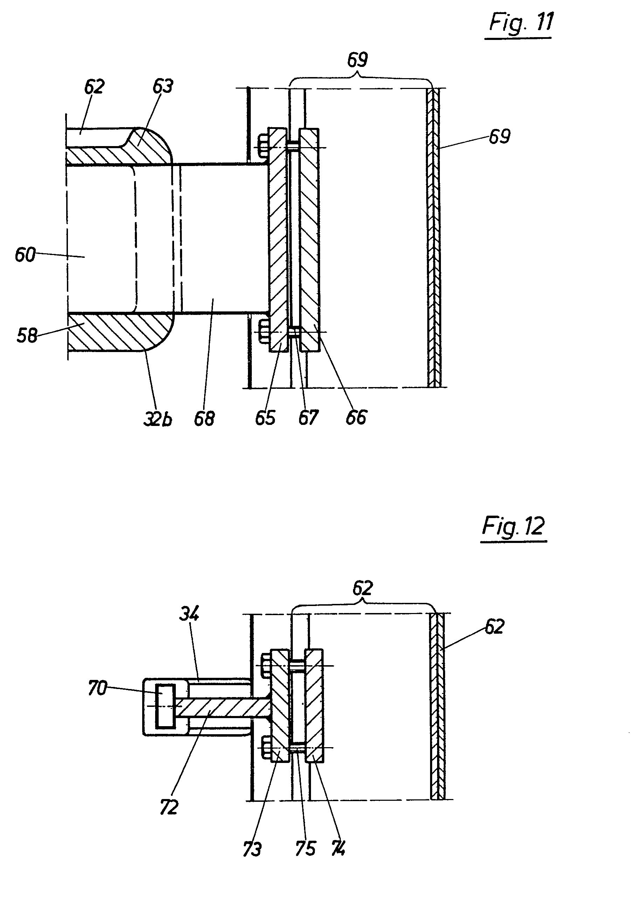

Die Konsolen 32a sind an der vorderen und hinteren Unterkante mit Geräteträgeschienen 35 ausgestattet und im übrigen in der in Fig. 10 wiedergegebenen Weise ausgebildet. Hiernach hat der beispielsweise aus Kunststoff bestehende Konsolenkörper 58 einen im wesentlichen quadratischen, sich in Längsrichtung erstreckenden, mittigen Kanal 59, durch den sich ein aus Quadratprofil-Metallrohr bestehender Konsolenträger 60 erstreckt. Nach der Vorderseite und der Rückseite sind Ausnehmungen 61 in den Konsolenkörper 58 eingeformt, die als offene Regalteile benutzt werden können oder auch zur Aufnahme von Schubfächern dienen können. An der Oberseite ist die Konsole mit einer Mulde 62 als Konsolentragfläche geformt und mit einem ringförmigen Wulst 63 umgeben, um Monitore und sonstige Geräte sicher innerhalb des Ringwulstes 63 aufstellen zu können. Die in Fig. 10 gezeigte Ausbildung des Konsolenkörpers 58 mit den Ausnehmungen 61 lässt auch zu, an der Vorderseite und bzw. oder der Rückseite der Konsole eine Verschlussklappe für die jeweilige Ausnehmung anzubringen, so dass die Konsole 32a in solchem Fall mit Klappe oder Tür verschliessbare Fächer aufweist. Es ist auch denkbar, an die Vorderseite und bzw. oder die Rückseite der Konsole 32a vor die Ausnehmung 61 einen Anschlussträger 46 gewünschter Art zu setzen, wobei man die Zuleitungen zum Anschlussträger durch den hohle Konsolenträger und durch seitlich in diesem und im Boden der Ausnehmungen 61 anzubringende Öffnungen führen kann.

Der Aufbau der flacheren Konsole 32b ist im wesentlichen gleich demjenigen nach Fig. 10, nur dass die Wandstärke im Bereich des Konsolenträgers 60 etwa gleich derjenigen in dem Bereich der Ausnehmungen 61 ist (vergl. Fig. 11). Es ergeben sich dadurch Fächer geringerer Höhe. Andererseits ist es auch möglich, schrankartige Konsolen zu bilden, bei denen mehrere Ausnehmungen 61 übereinander angeordnet sind. Eine solche schrankartige, also wesentlich höhere Konsole wird man dann mit zwei oder mehr übereinander angeordnete Konsolenträger 60 ausrüsten.

Anstelle der Ausbildung von Ausnehmungen für Regalfächer o.dgl. könnten seitlich auch herausziehbare Platten in der Konsole angebracht sein, die dann wahlweise benutzbare Arbeits- und Auflageplatten bilden.

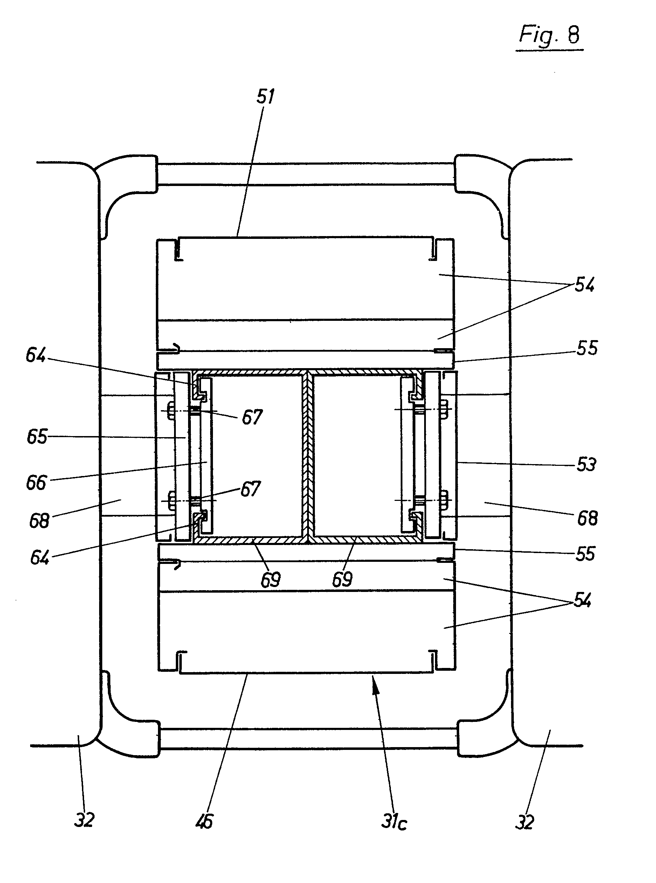

Der innere Aufbau der Säule 31c, der auch bei allen oben erläuterten Ausführungen der Säule 31, 31a und 31b der gleiche sein kann, ergibt sich aus Fig. 8. Hiernach ist ein stabiles Säulengerüst dadurch geschaffen, dass zwei C-Profilschienen 69 mit ihrem Rücken aneinander gesetzt sind. Dieses Säulengerüst kann sich über die gesamte Höhe der Säule erstrecken. Es ist aber auch möglich, in dieses Säulengerüst zwei oder mehrere Drehbewegungsführungen einzubauen, so dass Abschnitte des Säulengerüstes gegeneinander verdreht werden könnten. Dies ist vorzusehen, wenn es erwünscht ist, die gesamte Säule oder Abschnitte der Säule um die vertikale Achse drehbar zu machen.

An den offenen Seiten der das Säulengerüst bildenden C-Profilschienen 69 sind die Trageinrichtungen 68 für die Konsolen 32 mittels aussen und innen über die C-Flansche 64 greifenden, äusseren Klemmplatten 65 und inneren Klemmplatten 66 befestigt. Die inneren Klemmplatten 66 sind in die jeweilige C-Profilschiene 69 eingeführt, und die äussere Klemmplatte 65 ist mittels Schraubenbolzen 67 gegen die innere Klemmplatte 66 gezogen. Durch Lösen der Schraubenbolzen 67 können die Klemmplatten 65 und 66 in Längsrichtung der C-Profilschiene 69 nach Wunsch verschoben werden.

Die Konsolen-Trageinrichtungen 68 können in einfachster Ausführung das sich aus dem Konsolenkörper 58 heraus erstreckende Quadratprofil-Metallrohr 60 sein, das mit dem freien Ende fest mit der äusseren Klemmplatte 65 verbunden, beispielsweise an diese angeschweisst ist (Fig. 11). Wenn es jedoch erwünscht ist, die Konsole 32 um ihre Längs-Mittelachse kippeinstellbar zu machen, kann die Konsolen-Trageinrichtung beispielsweise als festziehbare Zahnkupplung ausgebildet sein.

An die Seitenflächen der miteinander verbundenen C-Profilschienen 69 sind die Füll- und Tragprofile 55 angesetzt, die den mittigen Seitenwandteil 53 zwischen sich aufnehmen (vergl. Fig. 3). Dieser mittige Seitenwandteil der aus Einzelplatten bestehen kann, ist als Abdeckung über die Klemmplatteneinrichtungen 65, 66 der Konsolen 32 und die Klemmplatteneinrichtungen 73, 74 der ringförmigen Geräteträgerschiene 33 gesetzt.

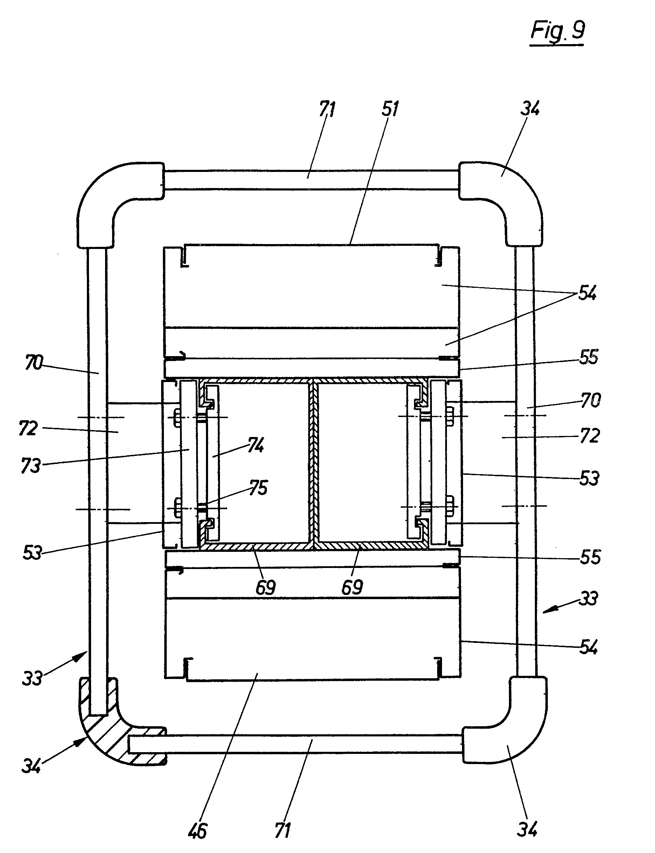

Wie weiterhin aus den Fig. 8 und 9 ersichtlich, sind auf die Füll- und Trägerprofile 55 H-Profilschienen 54 gesetzt, die zusammen mit den Füll- und Trägerprofilen 55 geeignete Führungskanäle für die in der Säule 31 verlegten Systemleitungen bilden. In die an der Vorderseite und der Rückseite der Säule 31 liegenden offenen Seiten der H-Profilschienen 34 sind die Anschlussträger 46 und die Verkleidungsplatten 51 eingesetzt.

Der Aufbau der ringförmigen Geräteträgerschiene 33 und deren Anbringungsweise an dem durch die C-Profilschienen 69 gebildeten Säulengerüst sind in den Fig. 9 und 12 wiedergegeben. Hiernach wird die ringförmige Geräteträgerschiene durch vier Schienenabschnitte gebildet, und zwar zwei längeren Schienenabschnitten 70 und zwei kürzeren Schienenabschnitten 71. Diese Schienenabschnitte 70 und 71 bestehen aus Edelstahlrohr mit Reckteckquerschnitt. Die Enden dieser Schienenabschnitte 70 und 71 erstrecken sich in die an den Ecken der Geräteträgerschiene 33 angebrachten Kunststoffpuffer 34 und sind dort durch Einformen, Einkleben oder zumindest festes Einstecken sicher gehalten.

Die längeren Schienenabschnitte 70 tragen im mittleren Bereich einen entweder durch Anschrauben oder Anschweissen befestigten plattenförmigen Träger 72, der an seinem anderen Ende mit einer äusseren Klemmplatte 73 fest verbunden, beispielsweise verschweisst ist. Der äusseren Klemmplatte 73 ist innerhalb der C-Profilschiene 69 die innere Klemmplatte 74 gegenübergestellt. In gleicher Weise wie für die Befestigung der Konsolen werden diese Klemmplatten 73 und 74 in der gewünschten Anbringungshöhe der ringförmigen Geräteträgerschiene 33 mittels Schrauben 75 festgezogen. Die Trägerplatte 73 erstreckt sich durch den Seitenwandteil 53 der zu diesem Zweck ebenso wie an der Befestigungsstelle der Konsolen ausgeschnitten ist.

Will man Höhenverstellbarkeit der ringförmigen Geräteträgerschiene 33 und der Konsolen 32 vorsehen, so kann man die Seitenwandteile 53 in mehr oder weniger kurze Abschnitte unterteilen und nach der Höhenverstellung der ringförmigen Geräteträgerschiene 33 bzw. der einen oder anderen Konsole 32 neu auf der Seitenwand der Säule verteilen bzw. zwischen den Füll- und Trägerprofilen 55 einsetzen.

Die Fig. 11 und 12 zeigen, dass sich die für die Befestigung der Konsolen benutzten Klemmplatten 65 und 66 und die für die Befestigung der ringförmigen Geräteträgerschiene 33 benutzten Klemmplatten 73 und 74 lediglich in ihrer vertikalen Breite unterscheiden entsprechend dem von den Konsolen 32 auf die C-Profilschienen 69 zu übertragenden, wesentlich grösseren, Drehmomenten.

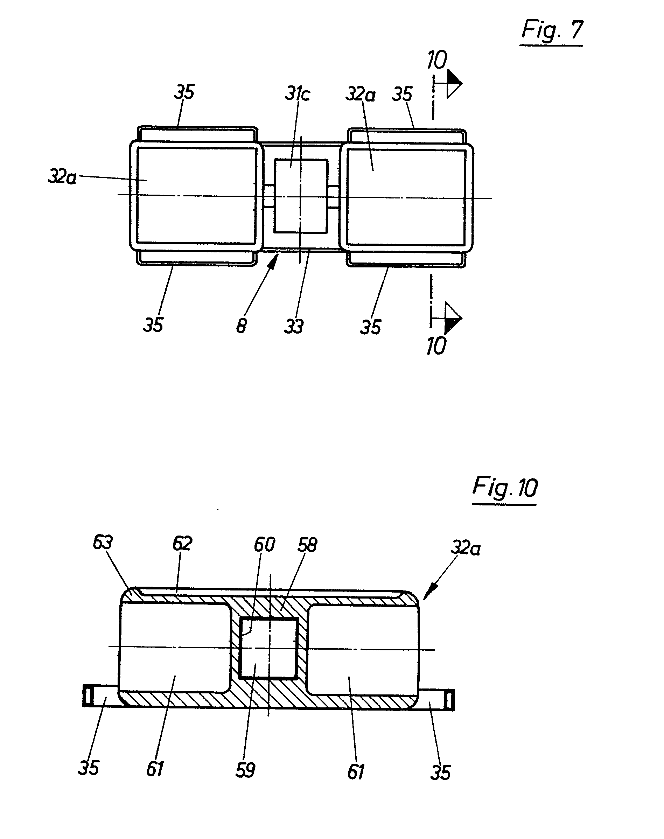

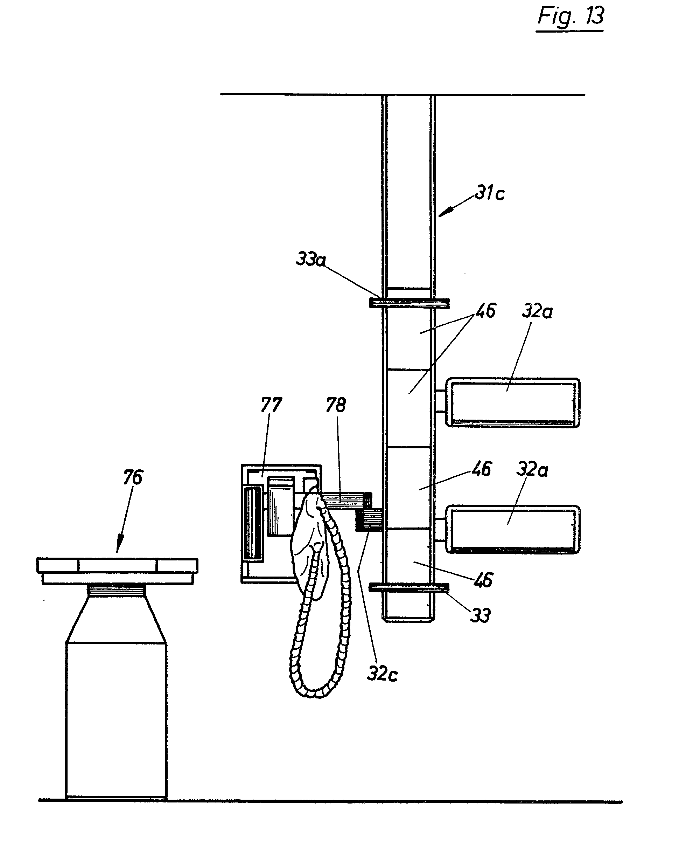

Fig. 13 zeigt den Einsatz einer im wesentlichen gemäss Fig. 5 und 6 aufgebauten Säule 31c in einem Narkoseraum bzw. im Narkosebereich eines Operationssaales. In dieser Ausführungsform trägt die Säule 31c an ihrer Vorderseite wiederum Anschlussträger 46. An einer Seitenwand sind zwei Konsolen 32a angebracht, wie sie in Verbindung mit den Fig. 10 und 11 oben erläutert worden sind. Im Unterschied zu der Ausführung nach Fig. 6 und 7 ist die Säule 31c in diesem Beispiel zusätzlich mit einer oberen ringförmigen Geräteträgerschiene 33a ausgestattet. Die Säule 31c ist in diesem Beispiel im Bereich eines Narkosetisches, vorzugsweise an einem Eckbereich des Narkosetisches 76 angeordnet. An der dem Narkosetisch 76 benachbarten Seitenfläche trägt die Säule 31c eine Spezialkonsole 32c an der ein Narkosegerät 77 mittels eines Trägerarmes 78 schwenkbar angebracht ist. Die Spezialkonsole 32c ist in gleicher Weise mittels Klemmplatten am Gerüst der Säule 31c befestigt, wie dies in den Fig. 8 und 11 gezeigt ist.

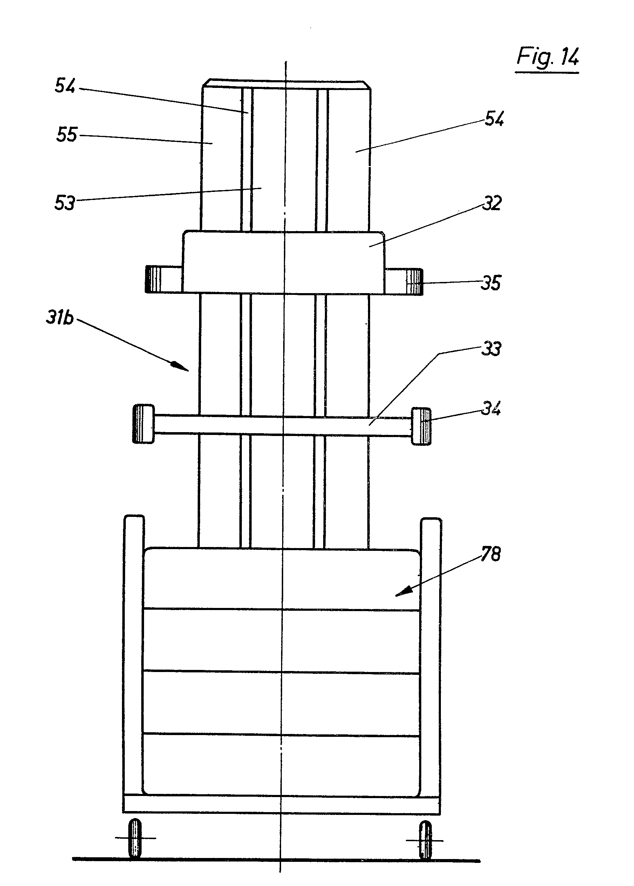

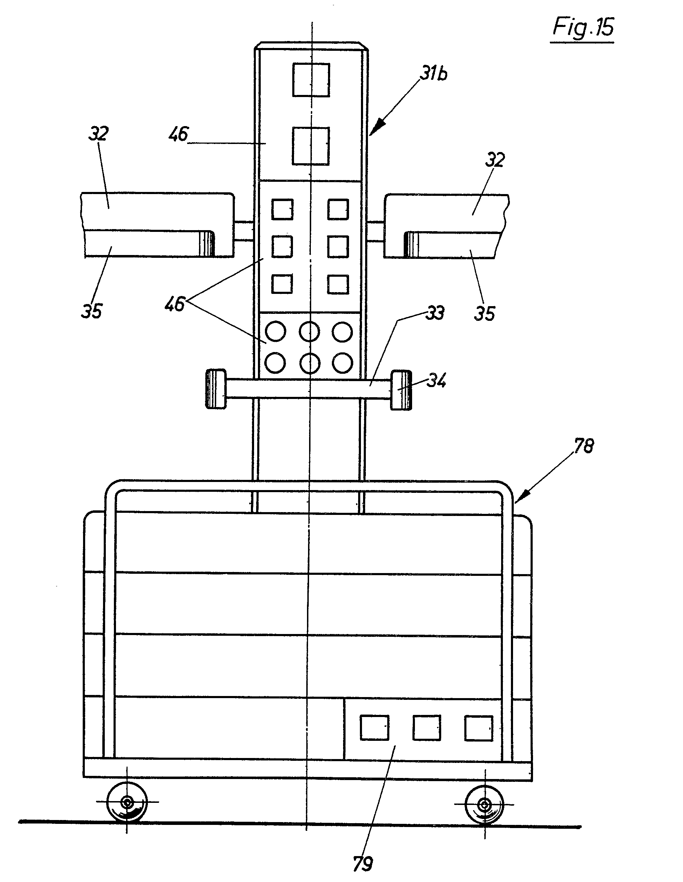

Die Fig. 14 und 15 beziehen sich auf eine Ausbildung der Säule als bewegliche Einheit. Hierzu ist eine mit der Ausführungsform gemäss Fig. 5 vergleichbare Säule 31b auf einem Wagen 80 angebracht. Der Wagen enthält in diesem Beispiel die erforderlichen Reservoirbehälter für die Gas- und Flüssigkeitsversorgung der Säule 31b und Aufnahmetanks zum Absaugen von Flüssigkeiten und Gasen über die Säule 31b. Die elektrische Versorgung erfolgt mittels einer in Fig. 15 gezeigten Anschlussplatte 79, an der die Verbindung zu zentralen Installationsleitungen über Kabel hergestellt werden. Die Säule 31b trägt in diesem Beispiel wiederum zwei Konsolen 32, eine ringförmige Geräteträgerschiene 33 und Anschlussträger 46 verschiedener Ausbildung.

Wie aus den obigen Darlegungen ersichtlich, ergeben sich erhebliche Unterschiede zu den bekannten kombinierten Anschlusseinrichtungen:

- die vertikalen ggf. drehbar angeordneten das Gerüst der Säule bildenden Profile erlauben es, auf einer sehr kleinen Fläche eine grosse Zahl von Anschlüssen unterzubringen, die alle bequem erreichbar sind;
- die durchschnittlichen Abmessungen der Einheit sind sehr gering, so dass der Platzbedarf minimal ist. Bei Einsatz der Anschlusseinrichtung im Gesundheitswesen kann dadurch das Kopfende des Krankenbettes zugänglich bleiben;
- es gibt eine horizontale Fläche, wodurch Staubansammlung und Reinigungsprobleme ausgeschlossen werden;
- die Trägerkonstruktion d.h. deren Profile und Schienensysteme sind vollständig integriert. Dadurch kann die Zahl der Hilfskonstruktionen beschränkt bleiben.
- da die Anschlüsse allseitig angebracht werden können, lassen sich auch ergonomische und funktionale Vorteile realisieren.
- ausser den oben dargelegten Vorteilen werden bei der erfindungsgemässen Anschlusseinrichtung alle Vorteile der bekannten, kombinierten Anschlusseinrichtungen voll beibehalten.

Liste der Bezugszeichen

| | |
|---|---|
| 20 | - Krankenbett |
| 21 | - Anschlussschiene |
| 30 | - Anschlusseinrichtung |
| 31, a, b, c | - Säule |
| 32, a, b, c | - Konsole |
| 33 | - Geräteträgerschiene |
| 33a | - obere Geräteträgerschiene |
| 34 | - Eckpuffer |
| 35 | - Geräteträgerschiene |
| 36 | - Geräte |
| 37 bis 40 | - Leitungen |
| 41 | - Gerät (Monitor) |
| 42 | - Fussboden |
| 43 | - Raumdecke |
| 44 | - Zwischendeckenbereich |
| 45 | - Geschossdecke |
| 46, a, b, c, d | - Anschlussträger |
| 47 | - Gas-Absauganschluss |
| 48, a, b | - Schwachstromanschlüsse |
| 49 | - Starkstromsteckdosen |
| 50 | - Gassteckdosen |
| 51 | - Wand- und Verkleidungsplatten |
| 52 | - Sockel |
| 53 | - Wandplatten |
| 54 | - H-Profilschienen |
| 55 | - Trägerprofile |
| 56 | - Deckwand |
| 57 | - Bodenplatte |
| 58 | - Konsolenkörper |
| 59 | - mittiger Kanal |
| 60 | - Konsolenträger |
| 61 | - Ausnehmungen |
| 62 | - Mulde |
| 63 | - Ringwulst |
| 64 | - C-Flansche |
| 65 und 66 | - Klemmplatten |
| 67 | - Schraubenbolzen |
| 68 | - Konsolen-Trageinrichtungen |
| 69 | - C-Profilschienen |
| 70 | - längere Schienenabschnitte |
| 71 | - kürzere Schienenabschnitte |
| 72 | - plattenförmige Träger |
| 73 und 74 | - Klemmplatteneinrichtungen |
| 75 | - Schraubenbolzen |
| 76 | - Narkosetisch |
| 77 | - Narkosegerät |
| 78 | - Trägerarm |
| 79 | - Anschlussplatte |
| 80 | - Wagen |

**Patentansprüche**

1. Kombinierte Anschlusseinrichtung für verschiedenartige Ver- und Entsorgungssysteme, vorzugsweise für Krankenhäuser, Laboratorien, Fertigungsstätten u.dgl., die in Art einer Säule (31, 31a, b, c) an einem Bett (20), einem Arbeitstisch oder einem Fertigungsplatz, vorzugsweise dessen Eckbereich, anzuordnen ist, die erforderlichen Leitungen der in ihr vorgesehenen Ver- und Entsorgungssysteme in Vertikalführung in ihrem Inneren aufnimmt, und an mindestens einer ihrer Wandflächen mit den Leitungen der diversen Ver- und Entsorgungssysteme verbundene Anschlussvorrichtungen trägt, deren Anschlüsse (47 bis 50) in den jeweiligen Anforderungen entsprechend zusammengefassten Anschlussgruppen auf Anschlussträgern (46, 46a, b, c, d) angebracht sind, die selbst wiederum Aussenwandteile der Säule (31, 31a, b, c) bilden, dadurch gekennzeichnet, dass

- die Säule (31, 31a, b, c) in ihrem inneren Aufbau ein aus Profilschienen (69) gebildetes, vertikale Aufnahmekanäle für Ver- und Entsorgungsleitungen einschliessendes, stabiles Säulengerüst aufweist,
- an die Aussenseite dieses Säulengerüstes weitere vertikale Aufnahmekanäle für Ver- und Entsorgungsleitungen bildende Profilschienen (54, 55) angesetzt sind und
- die die Aufnahmekanäle abdeckenden Aussenflächen der Säule (31, 31a, b, c) durch an den Profilschienen (69, 54, 55) angebrachte Deckplatten (51) und Anschlussträger (46, 46a, b, c, d) gebildet sind, wobei
- an dem durch Profilschienen (69) gebildeten Säulengerüst mindestens eine sich ringförmig in einer im wesentlichen horizontalen Ebene um die Säule (31, 31a, b, c) herum mit Abstand von deren Aussenflächen erstreckende erste Geräteträgerschiene (33) und an mindestens einer Seitenwand der Säule (31, 31a, b, c) mindestens eine seitlich vorstehende Konsole (32, 32a, b, c) angebracht sind,
- die Konsole (32, 32a, b, c) an mindestens einem Seitenrand eine mit diesem parallel verlaufende und bezüglich der Konsolen-Tragfläche vorgesetzte zweite Geräteträgerschiene (35) trägt und
- die Anbringungshöhe der Konsole (32, 32a, b, c) und der ringförmigen Geräteträgerschiene (33) wählbar oder verstellbar ist.

2. Anschlusseinrichtung nach Anspruch 1, dadurch gekennzeichnet, dass Anschlussträger (46, 46a, b, c, d) und Konsolen (32, 32a, b, c) auf allen Aussenflächen der Säule (31, 31a, b, c) verteilt angeordnet sind.

3. Anschlusseinrichtung nach Anspruch 1 oder 2, dadurch gekennzeichnet, dass die Säule (31, 31a, b, c) im wesentlichen nur an einer Seite oder zwei gegenüberliegenden Seiten mit Anschlussträgern (46, 46a, b, c, d) versehen ist und die von Anschlussträgern (46, 46a, b, c, d) freien Seiten eine oder mehrere Konsolen (32, 32a, b, c) tragen oder zum Anbringen von mindestens einer Konsole (32, 32a, b, c) ausgebildet sind.

4. Anschlusseinrichtung nach einem der Ansprüche 1 bis 3, dadurch gekennzeichnet, dass mindestens eine Konsole (32, 32a, b, c) vorgesehen ist, die um eine horizontale Achse, vorzugsweise ihre Mittelachse, kipp-einstellbar an der Säule (31, 31a, b, c) angebracht ist.

5. Anschlusseinrichtung nach einem der Ansprüche 1 bis 4, dadurch gekennzeichnet, dass eine oder mehrere Konsolen mit mindestens einseitig ausziehbarer zusätzlicher Stellplatte vorgesehen sind.

6. Anschlusseinrichtung nach einem der Ansprüche 1 bis 5, dadurch gekennzeichnet, dass eine oder mehrere Konsolen (32a, 32b) mit mindestens einem Schubfach vorgesehen sind.

7. Anschlusseinrichtung nach einem der Ansprüche 1 bis 6, dadurch gekennzeichnet, dass eine oder mehrere Konsolen (32a) mit mindestens einem eingebauten Anschlussträger (46) vorgesehen sind.

8. Anschlusseinrichtung nach einem der Ansprüche 1 bis 7, dadurch gekennzeichnet, dass die Säule (31, 31a, b, c) zumindest begrenzt um ihre vertikale Achse drehbar ist.

9. Anschlusseinrichtung nach einem der Ansprüche 1 bis 7, dadurch gekennzeichnet, dass die Säule (31, 31a, b, c) mindestens zwei vertikal übereinander angeordnete Säulenabschnitte aufweist und mindestens einer dieser Säulenabschnitte um die vertikale Säulenachse drehbar ist.

10. Anschlusseinrichtung nach einem der Ansprüche 1 bis 9, dadurch gekennzeichnet, dass sich die Säule (31b) vom Fussboden (42) aus auf einen Teil der Raumhöhe nach oben erstreckt und am oberen Ende mit einer Deckwand (56) verschlossen ist.

11. Anschlusseinrichtung nach einem der Ansprüche 1 bis 9, dadurch gekennzeichnet, dass sich die Säule (31c) als Hängesäule von der Raumdecke (43, 45) über einen Teil der Raumhöhe nach unten erstreckt und an der Unterseite mit einer Säulen-Bodenwand (57) verschlossen ist, wobei die Konsole bzw. Konsolen (32, 32a, b, c) in einem Abstand oberhalb des unteren Endes der Säule (31c) angebracht ist bzw. sind.

12. Anschlusseinrichtung nach Anspruch 11, dadurch gekennzeichnet, dass die Trägerschiene (33) der Säule (31c) in Abstand oberhalb des unteren Säulenendes angebracht ist.

13. Anschlusseinrichtung nach einem der Ansprüche 1 bis 12, dadurch gekennzeichnet, dass die Säule begrenzt seitlich verschiebbar angebracht ist.

14. Anschlusseinrichtung nach einem der Ansprüche 1 bis 9, dadurch gekennzeichnet, dass die Säule (31b) als fahrbare Einheit auf einem Wagen (80) angebracht ist.

15. Anschlusseinrichtung nach Anspruch 14, dadurch gekennzeichnet, dass der Wagen (80) Behälter als Reservoir und Aufnahmetanks für die in der Säule (31b) vorgesehenen Gas- und Flüssigkeits-Ver- und Entsorgungssysteme enthält.

16. Anschlusseinrichtung nach Anspruch 14 oder 15, dadurch gekennzeichnet, dass der Wagen (80) mit Anschlüssen (79) für Kabelverbindung der in der Säule vorgesehenen elektrischen Systeme für Energieversorgung, Nachrichtenübermittlung und Überwachung mit entsprechenden zentralen elektrischen Anschlusssystemen ausgestattet ist.

17. Anschlusseinrichtung nach Anspruch 14 oder 15, dadurch gekennzeichnet, dass der Wagen (80) mit Stromversorgungsaggregaten für die in der Säule (31b) vorgesehenen elektrischen Energieversorgungssysteme ausgestattet ist.

18. Anschlusseinrichtung nach einem der Ansprüche 14 bis 17, dadurch gekennzeichnet, dass der Wagen (80) mit Geräten zur drahtlosen Signalübermittlung für die in der Säule (31b) enthaltenen Systeme für Nachrichtenübermittlung und Überwachung ausgestattet ist.

## Claims

1. Combined connection facility for various supply and disposal systems, preferably for hospitals, laboratories, production shops and the like, which is to be arranged in the manner of a column (31, 31a, b, c) at a bed (20), a work table or a production station, preferably in its corner region, and receives, guided vertically in its interior, the necessary lines of the supply and disposal systems provided in it, and which carries on at least one of its wall surfaces connection devices which are connected to the lines of the various supply and disposal systems and the connections (47 to 50) of which, in connection groups combined according to the particular requirements, are attached to connection-carriers (46, 46a, b, c, d) themselves in turn forming outer wall parts of the column (31, 31a, b, c), characterised in that the column (31, 31a, b, c) has as regards its internal design a stable column structure formed from profile rails (69) and enclosing vertical receiving channels for supply and disposal lines, further profile rails (54, 55) forming vertical receiving channels for supply and disposal lines are attached to the outside of this column structure, the outer surfaces of the column (31, 31a, b, c) which cover the receiving channels are formed by cover plates (51) and connection-carriers (46, 46a, b, c, d) attached the profile rails (69, 54, 55), at least one first instrument-carrier rail (33), extending annularly in an essentially horizontal plane around the column (31, 31a, b, c) at a distance from its outer surfaces, is attached to the column structure formed by profile rails (69), at least one laterally projecting bracket (32, 32a, b, c) being attached to at least one side wall of the column (31, 31a, b, c), the bracket (32, 32a, b, c) carries on at least one side edge a second instrument-carrier rail (35) extending parallel to the latter and set forward relative to the bracket supporting face, and the height of attachment of the bracket (32, 32a, b, c) and of the annular instrument-carrier rail (33) is selectable or adjustable.

2. Connection facility according to Claim 1, characterised in that connection-carriers (46, 46a, b, c, d) and brackets (32, 32a, b, c) are arranged distributed on all the outer surfaces of the column (31, 31a, b, c).

3. Connection facility according to Claim 1 or 2, characterised in that the column (31, 31a, b, c) is provided with connection-carriers (46, 46a, b, c, d) essentially only on one side or on two sides located opposite one another, and the sides free of connection-carriers (46, 46a, b, c, d) carry one or more brackets (32, 32a, b, c) or are designed for the attachment of at least one bracket (32, 32a, b, c).

4. Connection facility according to one of Claims 1 to 3, characterised in that there is at least one bracket (32, 32a, b, c) which is attached to the column (31, 31a, b, c) so as to tilt adjustably about a horizontal axis, preferably its centered axis.

5. Connection facility according to one of Claims 1 to 4, characterised in that there are one or more brackets with an additional adjusting plate which can be extended at least on one side.

6. Connection facility according to one of Claims 1 to 5, characterised in that there are one or more brackets (32a, 32b) with at least one drawer.

7. Connection facility according to one of Claims 1 to 6, characterised in that there are one or more brackets (32a) with at least one built-in connection-carrier (46).

8. Connection facility according to one of Claims 1 to 7, characterised in that the column (31, 31a, b, c) is rotatable about its vertical axis at least to a limited extent.

9. Connection facility according to one of Claims 1 to 7, characterised in that the column (31, 31a, b, c) has at least two column sections arranged vertically above one another, and at least one of these column sections is rotatable about the vertical column axis.

10. Connection facility according to one of Claims 1 to 9, characterised in that the column (31b) extends upwards from the floor (42) over some of the room height and at the top end is closed by means of a cover wall (56).

11. Connection facility according to one of Claims 1 to 9, characterised in that the column (31c) extends downwards as a hanging column from the room's ceiling (43, 45) over some of the room height and on the underside is closed by means of a column base wall (57), the bracket or brackets (32, 32a, b, c) being attached at a distance above the bottom end of the column (31c).

12. Connection facility according to Claim 11, characterised in that the carrier rail (33) of the column (31c) is attached at a distance above the bottom end of the column.

13. Connection facility according to one of Claims 1 to 12, characterised in that the column is attached so as to be laterally displaceable to a limited extent.

14. Connection facility according to one of Claims 1 to 9, characterised in that the column (31b) is attached as a movable unit to a trolley (80).

15. Connection facility according to Claim 14, characterised in that the trolley (80) contains receptacles as reservoirs and receiving tanks for the gas and liquid supply and disposal systems provided in the column (31b).

16. Connection facility according to Claim 14 or 15, characterised in that the trolley (80) is equipped with connections (79) for the cable connection of the electrical power-supply, communication and monitoring systems provided in the column to corresponding central electrical connection systems.

17. Connection facility according to Claim 14 or 15, characterised in that the trolley (80) is equipped with current-supply units for the electrical power-supply systems provided in the column (31b).

18. Connection facility according to one of Claims 14 to 17, characterised in that the trolley (80) is equipped with instruments for wireless signal transmission for the communication and monitoring systems contained in the column (31b).

**Revendications**

1. Dispositif combiné de raccordement pour systèmes divers d'alimentation et d'évacuation, de préférence pour hôpitaux, laboratoires, ateliers de fabrication et analogues, qui est destiné à être adapté, sous la forme d'une colonne (31, 31a, b, c) à un lit (20), à une table de travail ou à un poste de fabrication, de préférence au coin de ceux-ci, qui contient dans un passage ménagé dans son intérieur les conduites nécessaires aux systèmes d'alimentation et d'évacuation qu'il comporte, et qui porte, sur au moins une de ses parois, des appareils de raccordement reliés aux conduites des divers systèmes d'alimentation et d'évacuation et dont les raccords (47 à 50) sont montés, en groupes respectant leurs prescriptions respectives, à des prises de raccordement (46, 46a, b, c,d) qui forment elles-mêmes des éléments de la paroi extérieure de la colonne (31, 31a, b, c), caractérisé en ce que

- la colonne (31, 31a, b, c) présente, dans sa disposition intérieure, une ossature stable, formée de rails profilés (69) et comportant des canaux verticaux destinés à recevoir des conduites d'alimentation et d'évacuation,
- à la face extérieure de cette ossature de la colonne sont disposés des rails profilés (54, 55) formant des canaux verticaux supplémentaires destinés à recevoir des conduites d'alimentation et d'évacuation, et
- les faces extérieures de la colonne (31, 31a, b, c) couvrant les canaux sont formées par des plaques de recouvrement (51) et des prises de raccordement (46, 46a, b, c, d) adaptées aux rails profilés (69, 54, 55), dans lequel
- à l'ossature de la colonne, formée par les rails profilés (69), est monté au moins un rail (33) sensiblement horizontal, destiné à supporter des appareils et disposé en anneau autour de la colonne (31, 31a, b, c) et à une certaine distance de la surface extérieure de delle-ci, et à au moins une paroi latérale de la colonne (31, 31a, b, c) est montée au moins une console (32, 32a, b, c) faisant saillie latéralement,
- à au moins un bord latéral, la console (32, 32a, b, c) supporte un second rail (35) destiné à supporter des appareils et disposé parallèlement à ce bord et en avant par rapport à la surface portante des consoles, et
- la hauteur de pose de la console (32, 32a, b, c) et du rail annulaire (33), destiné à supporter des appareils, peut être choisie ou réglée.

2. Dispositif de raccordement suivant la revendication 1, caractérisé en ce que les prises de raccordement (46, 46a, b, c, d) et les consoles (32, 32a, b, c) sont réparties sur toutes les faces extérieures de la colonne (31, 31a, b, c).

3. Dispositif de raccordement suivant la revendication 1 ou 2, caractérisé en ce que la colonne (31, 31a, b, c) est essentiellement pourvue de prises de raccordement (46, 46a, b, c, d) uniquement sur une face ou sur deux faces opposées, et en ce que les faces non pourvues de prises de raccordement (46, 46a, b, c, d) portent une ou plusieurs consoles (32, 32a, b, c) ou sont aménagées pour recevoir au moins une console (32, 32a, b, c).

4. Dispositif de raccordement suivant l'une des revendications 1 à 3, caractérisé en ce qu'il est prévu au moins une console (32, 32a, b, c) qui est agencée à la colonne (31, 31a, b, c) de façon à pouvoir être inclinée, de façon réglable, par basculement autour d'un axe horizontal, de préférence autour de son axe médian.

5. Dispositif de raccordement suivant l'une des revendications 1 à 4, caractérisé en ce qu'une ou plusieurs consoles sont pourvues d'au moins une plaque de réglage supplémentaire, pouvant être extraite d'un seul côté.

6. Dispositif de raccordement suivant l'une des revendications 1 à 5, caractérisé en ce qu'une ou plusieurs consoles (32a, 32b) sont pourvues d'au moins un tiroir.

7. Dispositif de raccordement suivant l'une des revendications 1 à 6, caractérisé en ce qu'une ou plusieurs consoles (32a) sont pourvues d'au moins une prise de raccordement (46) incorporée.

8. Dispositif de raccordement suivant l'une des revendications 1 à 7, caractérisé en ce que la colonne (31, 31a, b, c) peut tourner, au moins de façon limitée, autour de son axe vertical.

9. Dispositif de raccordement suivant l'une des revendications 1 à 7, caractérisé en ce que la colonne (31, 31a, b, c) se compose d'au moins deux sections verticales superposées et en ce qu'au moins une de ces sections peut tourner autour de l'axe vertical de la colonne.

10. Dispositif de raccordement suivant l'une des revendications 1 à 9, caractérisé en ce que la colonne (31b) s'étend vers le haut, à partir du plancher (42), sur une partie de la hauteur du local et en ce qu'elle est fermée à son extrémité supérieure par un couvercle (56).

11. Dispositif de raccordement suivant l'une des revendications 1 à 9, caractérisé en ce que la colonne (31c) est une colonne suspendue qui s'étend vers le bas, depuis le plafond (43, 45) du local sur une partie de la hauteur de ce local et en ce qu'elle est fermée par un fond (57) à son extrémité inférieure, la ou les console(s) (32, 32a, b, c) étant dans ce cas montée(s) à une certaine distance au-dessus de l'extrémité inférieure de la colonne (31c).

12. Dispositif de raccordement suivant la revendication 11, caractérisé en ce que le rail porteur (33) de la colonne (31c) est disposé à une certaine distance au-dessus de l'extrémité inférieure de la colonne.

13. Dispositif de raccordement suivant l'une des revendications 1 à 12, caractérisé en ce que la colonne est déplaçable latéralement de façon limitée.

14. Dispositif de raccordement suivant l'une des revendications 1 à 9, caractérisé en ce que la colonne (31b) est montée sur un chariot (80) pour constituer une unité mobile.

15. Dispositif de raccordement suivant la revendication 14, caractérisé en ce que le chariot (80) comporte des récipients formant réservoirs et bacs de réception pour les systèmes d'alimentation et d'évacuation de gaz et de liquides prévus dans la colonne (31b).

16. Dispositif de raccordement suivant l'une des revendications 14 ou 15, caractérisé en ce que le chariot (80) est équipé de raccords (79) assurant la liaison par câble des systèmes électriques prévus dans la colonne pour l'alimentation en énergie, la transmission de messages et la surveillance, avec des systèmes électriques centraux correspondants.

17. Dispositif de raccordement suivant l'une des revendications 14 ou 15, caractérisé en ce que le chariot (80) est équipé d'ensembles d'alimentation en courant pour les systèmes électriques d'alimentation en énergie prévus dans la colonne (31b).

18. Dispositif de raccordement suivant l'une des revendications 14 à 17, caractérisé en ce que le chariot (80) est équipé d'appareils pour la transmission sans fil de signaux, destinés aux systèmes de transmission de messages et de surveillance installés dans la colonne (31b).

30
31
32
33
34
35
36
37
38
39
40
41
20
21

Fig. 1

Fig. 2
Fig. 3
45
44
43
51
31a
47
46a
48a
46b
48b
46c
32
32
32
39
49
35
35
35
35
50
46d
38
34
33
37
38
36
51
52
42
42
52
55
54
53
31a
54
34
33

Fig. 5
32
46
46
56
31b
33
32
42
52

Fig. 4
31a
46
32b
32a
35
46
42
31a
33
51
52
35
32b
32a

Fig. 6
45
44
43
31c
51
46
7
7
32a
46
11
32a
9
9
33
12
57
42

Fig. 7
10
35
31c
32a
35
32a
35
8
33
35
10

Fig. 10
63
62
60
58
32a
35
61
59
61
35

Fig. 8

Fig. 9
71
51
34
54
55
70
70
72
72
73
74
53
75
53
55
69
69
33
54
33
34
46
71
34

Fig. 11
69
62
63
69
60
58
32b
68
65
67
66

Fig. 12
62
34
62
70
72
73
75
74

Fig. 13
31c
33a
46
32a
77
78
46
32a
76
46
33
32c

Fig. 14
54
55
53
54
32
35
31b
33
34
78

Fig.15
31b
32
46
32
35
46
33
35
34
78
79